# EUROPÄISCHE PATENTANMELDUNG

(11) **EP 1 533 394 A1**
(43) Veröffentlichungstag der Anmeldung: **25.05.2005**
(21) Anmeldenummer: 03405826.3
(22) Anmeldetag: 20.11.2003
(51) Int. Cl.: C22F 1/05

(54) **Automobilkarosseriebauteil**

(71) Anmelder: Alcan Technology & Management Ltd., 8212 Neuhausen am Rheinfall (CH)
(72) Erfinder: Bassi, Corrado, 3968 Veyras (CH); Timm, Juergen, 78256 Steisslingen (DE)

(57) **Zusammenfassung**

Bei einer Automobilkarosserie bzw. einer Komponente einer Automobilkarosserie mit wenigstens einem ersten Bauteil aus Blech aus einer ersten Aluminiumlegierung (A) und wenigstens einem zweiten Bauteil aus Blech aus einer zweiten Aluminiumlegierung (B) sind die erste und die zweite Aluminiumlegierung vom Typ AlMgSi und im Blech aus der zweiten Aluminiumlegierung (B) liegt ein wesentlicher Teil der zur Erzielung einer Warmaushärtung in fester Lösung benötigten Elemente Mg und Si zur Vermeidung einer Warmaushärtung vor der Warmaushärtung der Karosserie bzw. der Karosseriekomponente in der Form ausgeschiedener Mg₂Si- und/oder Si-Partikel vor. Neben dem gemeinsamen Rezyklieren der Prozessschrotte bei der Herstellung der verschiedenen Bauteile und einer einfachen Schrottverwertung der Karosseriebauteile in Altautos führt die Automobilkarosserie durch Verringerung der Aushärtbarkeit der zweiten Bauteile bei einer Warmaushärtung der Karosserie im Rahmen eines Lackeinbrennzyklus zu einem im Vergleich zu Lösungen nach dem Stand der Technik verbesserten Aufprallschutz für Fussgänger.

## Beschreibung

Die Erfindung betrifft ein Automobilkarosseriebauteil aus Blech aus einer Aluminiumlegierung vom Typ AlMgSi und eine Automobilkarosserie bzw. eine Komponente einer Automobilkarosserie mit wenigstens einem ersten Bauteil aus Blech aus einer ersten Aluminiumlegierung und wenigstens einem zweiten Bauteil aus Blech aus einer zweiten Aluminiumlegierung, wobei die erste und die zweite Aluminiumlegierung vom Typ AlMgSi sind und die zweiten Bauteile gegenüber den ersten Bauteilen nach einer Warmaushärtung der Karosserie bzw. der Karosseriekomponente tiefere mechanische Festigkeitswerte aufweisen.

Bei Automobilkarosseriebauteilen, Automobilkarosserien bzw. Komponenten von Automobilkarosserien tritt eine Warmaushärtung beispielsweise unter den Glühbedingungen beim Lackeinbrennen oder bei einer separaten durchgeführten Wärmebehandlung auf.

Die zunehmende Bedeutung der Herstellung leichterer Automobile mit dem Ziel einer Energieeinsparung hat zur Entwicklung einer grossen Anzahl von Aluminiumlegierungen für Automobilanwendungen geführt.

Verschiedene Komponenten in einem Automobil verlangen meistens auch unterschiedliche Eigenschaften. Beispielsweise sollte eine Aluminiumlegierung für Aussenblechanwendungen sehr gut umformbar sein, um Streckziehen, Tiefziehen und Biegen zu ermöglichen, und gleichzeitig eine hohe Festigkeit nach dem Lackeinbrennen erreichen.

In Europa werden für Aussenblechanwendungen, insbesondere für Motorhauben, bereits in grösserem Ausmass AlMgSi-Legierungen, wie z.B. die Legierung AA 6016, verwendet.

Insbesondere im Hinblick auf die Schrottverwertung und die Rezyklierbarkeit wäre es besonders vorteilhaft und zweckmässig, wenn für alle Aluminiumblechanwendungen in der Karosserie Aluminiumlegierungen, die derselben Legierungsfamilie angehören, eingesetzt werden könnten. Aus der US-A-4 082 578 und der EP-A-0 811 700 sind für Innen- und Aussenblechanwendungen bei Automobilkarosserien Aluminiumlegierungen vom Typ AlMgSi bekannt.

Aluminiumlegierungen im Strukturbereich eines Fahrzeugs verbessern das Fahrverhalten (Fahrzeugsteifigkeit, Achslastverteilung, Schwerpunktslage etc.). Derartige Konstruktionen können zudem eine hohe Fähigkeit zur Energieabsorption im Crashfall aufweisen. In der EP-A-1 165 848 sind aus Blech gefertigte Strukturbauteile aus einer AlMgSi-Legierung offenbart.

Insbesondere in Europa hat die Herabsetzung des Verletzungsrisikos bei Automobilunfällen hohe Priorität. Durch Verbesserung der Sicherheit der Automobile lässt sich dieses Ziel auf wirksamste Art erreichen. Bisher wurde jedoch zur Verminderung der Schwere von Verletzungen bei Fussgängern und Motorradfahrern, die bei einem Unfall auf die Frontpartie eines Autos aufschlagen, sehr wenig getan. Durch die Schaffung von Frontpartien von Automobilen mit einem entsprechenden Energieabsorptionsverhalten können wesentliche Verbesserungen erreicht werden.

Fussgängerschutzmassnahmen an Automobilkarosserien können zur Vermeidung ernsthafter und tödlicher Verletzungen bei Zusammenstössen im mittleren Geschwindigkeitsbereich sehr wirksam sein. Bei den meisten Verkehrsunfällen mit Fussgängern kollidiert ein Automobil mit den Betroffenen frontal. Dabei wird die Verletzung des Fussgängers nur zum Teil durch den anfänglichen Zusammenstoss verursacht. In vielen Fällen knickt der Oberkörper des Angefahrenen ein, und sein Kopf schlägt auf der Motorhaube auf.

Die meisten Kopfverletzungen werden bei Erwachsenen durch das obere Ende und bei Kindern durch den vorderen Bereich der Motorhaube erzeugt. Die Vorderkante der Motorhaube ist besonders kritisch bezüglich Verletzungen im Oberschenkel- oder im Hüftbereich. Detaillierte Veränderungen im Blechaufbau des Motorhaubenrandes sind notwendig, um die Steifigkeit zu reduzieren und genügend Stauchtiefe vorzusehen. Dies kann durch Schwächung oder Zurücknahme der Innenblechverstärkungen der Motorhaube, des Verschlusses und der Verschlussquerstreben erreicht werden.

Durch verschiedene aktive und passive Massnahmen werden Frontklappen und andere grossflächige Karosserieelemente von Automobilen "weicher" gemacht. Die Bauteile werden dabei so ausgestaltet oder aktiv verändert, dass sie bei einem Aufprall einen grossen Teil der kinetischen Energie durch plastische Verformung aufnehmen können. Diese Massnahmen führen zu weniger gravierenden Verletzungen.

Zu den passiven Massnahmen gehören das Design, die Konstruktion und das Material. Bezüglich des Materials sind verschiedene Materialverbunde wie z.B. Sandwichkonstruktionen mit Schaumwerkstoffen bekannt. Es wurden aber bisher noch keine Versuche unternommen, relativ weiche Aluminiumlegierungen einzusetzen.

Der Erfindung liegt die Aufgabe zugrunde, ein Automobilkarosseriebauteil sowie eine Automobilkarosserie bzw. eine Komponente einer Automobilkarosserie der eingangs genannten Art zu schaffen, die neben dem gemeinsamen Rezyklieren der Prozessschrotte bei der Herstellung der verschiedenen Bauteile und einer einfachen Schrottverwertung der Karosseriebauteile in Altautos zu einem im Vergleich zu Lösungen nach dem Stand der Technik verbesserten Aufprallschutz für Fussgänger führt.

Bezüglich des einschaligen Automobilkarosseriebauteils führt zur erfindungsgemässen Lösung der Aufgabe, dass im Blech ein wesentlicher Teil der zur Erzielung einer Warmaushärtung in fester Lösung benötigten Elemente Mg und Si zur Vermeidung einer Warmaushärtung in der Form ausgeschiedener Mg₂Si- und/oder Si-Partikel vorliegt.

Bezüglich der mehrschaligen Automobilkarosserie bzw. der aus einem Aussen- und einem Innenteil hergestellten Komponente einer Automobilkarosserie führt zur erfindungsgemässen Lösung der Aufgabe, dass wenigstens im Blech aus der zweiten Aluminiumlegierung ein wesentlicher Teil der zur Erzielung einer Warmaushärtung in fester Lösung benötigten Elemente Mg und Si zur Vermeidung einer Warmaushärtung vor der Warmaushärtung der Karosserie bzw. der Karosseriekomponente in der Form ausgeschiedener Mg₂Si- und/oder Si-Partikel vorliegt.

Der wesentliche Kern der Erfindung liegt somit darin, die "weichen" Bauteile mit einer vorgegebenen Gefügestruktur einzusetzen, so dass -- im Gegensatz zu den "harten" Bauteilen -- unter üblichen Lackeinbrennbedingungen keine Warmaushärtung auftritt und demzufolge auch keine weiteren Zunahme der mechanischen Festigkeitswerte erfolgt, sondern die weichen Bauteile die durch die vorgegebene Gefügestruktur bereits eingestellten Werte beibehalten.

Als harte erste Aluminiumlegierung wird eine Legierung bevorzugt, die
0,6 bis 1,2 Gew.-% Silizium
0,3 bis 0,8 Gew.-% Magnesium
max. 0.8 Gew.-% Kupfer
max. 0,4 Gew.-% Eisen
max. 0,3 Gew.-% Mangan
max. 0,2 Gew.-% Vanadium
sowie herstellungsbedingte Verunreinigungen und Aluminium als Rest enthält.

Die harte erste Aluminiumlegierung umfasst insbesondere die üblichen Karosserieaussenhautwerkstoffe wie z.B. AA 6016 und AA 6111.

Grundsätzlich kann als weiche zweite Aluminiumlegierung eine mit der ersten harten Aluminiumlegierung identische Legierung eingesetzt werden, jedoch wird im Allgemeinen eine Zusammensetzung mit einem wesentlich tieferen Festigkeitsniveau bevorzugt.

Als weiche zweite Aluminiumlegierung wird eine Legierung bevorzugt, die
0,25 bis 0,60 Gew.-% Silizium
0,25 bis 0,60 Gew.-% Magnesium
0,05 bis 0.30 Gew.-% Kupfer
max. 0,40 Gew.-% Eisen
max. 0,30 Gew.-% Mangan
max. 0,20 Gew.-% Vanadium
sowie herstellungsbedingte Verunreinigungen einzeln max. 0,05 Gew.-%, insgesamt max. 0,15 Gew.-%, und Aluminium als Rest enthält.

Für die einzelnen Legierungselemente der zweiten Aluminiumlegierung gelten die folgenden bevorzugten Gehaltsbereiche:
0,30 bis 0,50 Gew.-% Silizium
0,30 bis 0,50 Gew.-% Magnesium
max. 0.20 Gew.-% Kupfer
0,05 bis 0,20 Gew.-% Eisen
max. 0,10 Gew.-% Mangan
max. 0,15 Gew.-% Vanadium

Das gewünschte Festigkeitsniveau bzw. der gewünschte Weichheitsgrad der weichen zweiten Bauteile wird hauptsächlich über den Mg- und den Si-Gehalt der zweiten Aluminiumlegierung in Kombination mit einer thermischen Behandlung der aus der Legierung hergestellten Bleche vor deren Umformung zu den zweiten Bauteilen eingestellt. Mit der thermischen Behandlung wird sichergestellt, dass die gewünschten tiefen mechanischen Festigkeitswerte der weichen zweiten Bauteile auch nach Durchführung eines Lackeinbrennzyklus an der Automobilkarosserie im Wesentlichen unverändert sind. Je nach Durchführung bewirkt die thermische Behandlung
- eine Ausscheidung eines wesentlichen Teils der Legierungselemente Mg und Si aus der festen Lösung in der Form von Si- und Mg₂Si-Partikeln sowie eine Vergröberung derselben, so dass die genannten Legierungselemente für die nachfolgende Warmaushärtung nicht mehr zur Verfügung stehen, und/oder
- die thermische Behandlung verhindert eine Rücklösung der ausgeschiedenen Mg₂Si- und Si-Partikel, so dass die Legierungselemente Mg und Si für eine weitere Aushärtung bei der nachfolgenden Warmauslagerung während eines nachfolgenden Lackeinbrennzyklus ebenfalls nicht mehr zur Verfügung stehen.

Es ist auch denkbar, anstelle eines "harten" ersten Bauteils ein "weiches", d.h. nicht warmaushärtbares Bauteil einzusetzen und die unterschiedlichen Festigkeitswerte des ersten und des zweiten Bauteils über die Konzentration der Legierungselemente Mg und Si einzustellen.

Die "weichen" Bleche bzw. die Bleche aus der zweiten Aluminiumlegierung können auf herkömmliche Art über Strang- oder Bandgiessen mit nachfolgendem Warm- und/oder Kaltwalzen mit oder ohne Zwischenglühungen hergestellt werden.

Der bei den Blechen aus der zweiten Aluminiumlegierung gewünschte Ausscheidungszustand der Legierungselemente Mg und Si kann in an sich bekannter Art auf unterschiedliche Weise erreicht werden. Zu den bevorzugten Verfahrensschritten, die vom herkömmlichen Fertigungsprozedere von AlMgSi-Karosseriewerkstoffen abweichen und zur gewünschten Vorausscheidung der aushärtungsrelevanten Legierungselemente Mg und Si führen, gehören die folgenden Schritte, die einzeln oder in Kombination durchgeführt werden können:
- Keine Homogenisierungsglühung des Gussbarrens, lediglich Aufheizen auf Warmwalztemperatur und sofort Warmwalzen.
- Durchführung einer "partiellen Lösungsglühung" der auf Enddicke gewalzten Bleche während einer kurzen Zeitdauer bei verhältnismässig tiefer Temperatur mit einer kontinuierlichen Glühung in einem Banddurchlaufofen in einem Temperaturbereich von etwa 450°C bis 520°C während max. 30 sec, gegebenenfalls unter Anwendung milder Abkühlungsbedingungen.
- Durchführung einer "partiellen Heterogenisierungsglühung" der auf Enddicke gewalzten Bleche mit einer Glühung von Coils in einem Kammerofen mit einer Haltezeit von etwa 1 bis 4 h in einem Temperaturbereich von etwa 330°C bis 400°C.

Grundsätzlich erfolgt die Auswahl der zweiten Aluminiumlegierung in erster Linie aufgrund eines vorgegebenen Festigkeitsniveaus. Die Festlegung der erforderlichen Temperatur und der Zeitdauer bei Durchführung der vorstehend genannten Glühungen zur Erzielung eines Gefügezustandes, der bei einer nachfolgenden Warmauslagerung nicht zu einem weiteren Anstieg der mechanischen Festigkeitswerte führt, erfolgt für jede Legierung bzw. jede Anwendung individuell anhand einer einfachen Versuchsreihe.

Bevorzugt sind die weichen zweiten Bauteile Innenbleche eines Karosserieelements, insbesondere einer Motorhaube, und im Frontbereich der Karosserie angeordnete Verkleidungsteile oder Strukturbauteile bzw. Verstärkungselemente. Die weichen zweiten Bauteile können jedoch auch Karosserieelemente sein, die bei herkömmlichen Automobilkarosserien von harten ersten Bauteilen gebildet werden. Ein wesentlicher Einsatzbereich der weichen zweiten Bauteile sind damit tiefgezogene Karosserieteile mit gutem Biegeverhalten.

Ein weiches Bauteil kann beispielsweise auch als Innenblech einer Stahl- oder Kunststoffhaube, als Verkleidungsteil im vorderen Bereich eines Autos (z.B. Kühlergrill, Stossfängerverkleidung, Spoiler etc.) oder als Strukturbauteil bzw. Verstärkungsblech im Frontbereich (z.B. Verstärkungsblech im "Verschlussbereich" der Haube, Trägerblech für Kühler, Scheinwerfer und andere Aggregate im Frontbereich etc.) eingesetzt werden.

Eine weitere, in dieser Art nicht bekannte Anwendung im Karosseriebau können zudem "vorgehängte" Schutzbleche darstellen. In diesem Fall spielt das festgestellte verbesserte Biegeverhalten eine besonders wichtige Rolle, da es beim Aufprall eine Riss- oder Splitterbildung in den Falten verhindert, wodurch die Verletzungsgefahr weiter minimiert wird.

Weitere Vorteile, Merkmale und Einzelheiten der Erfindung ergeben sich aus der nachfolgenden Beschreibung bevorzugter Ausführungsbeispiele sowie anhand der Zeichnung; dies zeigt in
- - Fig. 1: ein Diagramm mit den Dehngrenzen einer ersten und einer zweiten Aluminiumlegierung in verschiedenen Auslagerungszuständen;
- - Fig. 2: ein Diagramm mit den Differenzen der Dehngrenzen der ersten und der zweiten Aluminiumlegierung von Fig. 1 in verschiedenen Auslagerungszuständen zu den Dehngrenzen der Legierungen im Lieferzustand T4.

### Beispiel

Aus einer ersten Aluminiumlegierung A (AA 6016) und einer zweiten Aluminiumlegierung B mit den in der Tabelle 1 angegebenen chemischen Zusammensetzungen wurden auf herkömmliche Art durch vertikales Stranggiessen, Homogenisierungsglühen, Warm- und Kaltwalzen Bänder einer Dicke von 1,2 mm hergestellt.

**Tabelle 1**

| Leg. | Si | Fe | Cu | Mn | Mg | Cr | Zn | Ti | V |
|---|---|---|---|---|---|---|---|---|---|
| A | 1.14 | 0.21 | 0.08 | 0.07 | 0.55 | 0.013 | 0.003 | 0.033 | <0.005 |
| B | 0.42 | 0.17 | 0.08 | 0.07 | 0.40 | 0.018 | <0.003 | 0.024 | 0.006 |

Die Bänder wurden in einem Banddurchlaufglühofen einer Lösungsglühung (Legierung A) bzw. einer partiellen Lösungsglühung (Legierung B) unterworfen, nachfolgend an bewegter Luft abgeschreckt und durch Lagerung während einigen Tagen bei Raumtemperatur zum Lieferzustand T4 ausgelagert. Für die beiden Aluminiumlegierungen A und B wurden die folgenden Lösungsglühbedingungen gewählt:

| | |
|---|---|
| Legierung A | 550°C / 30 sec |
| Legierung B | 500°C / 20 sec |

An Blechproben aus den Aluminiumlegierungen A und B im Lieferzustand T4 wurde mit einer Glühung bei einer Temperatur von 185°C während einer Zeitdauer von 20 min ein Lackeinbrennzyklus simuliert. Um den Einfluss einer Kaltverformung (KV) auf die Dehngrenze R_{p0.2}, die Bruchspannung R ₘ und die Bruchdehnung A₈₀ zu untersuchen, wurden die Blechproben im Lieferzustand zusätzlich 2% kaltverformt. Eine weitere Serie von Blechproben wurde im Lieferzustand 2% kaltverformt und anschliessend der vorstehend erwähnten Glühbehandlung unterzogen.

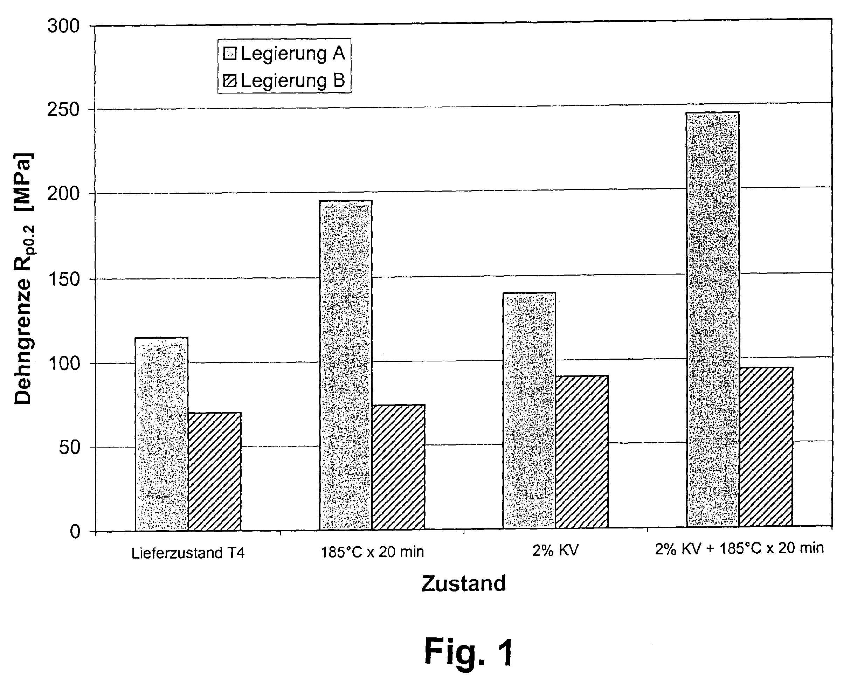

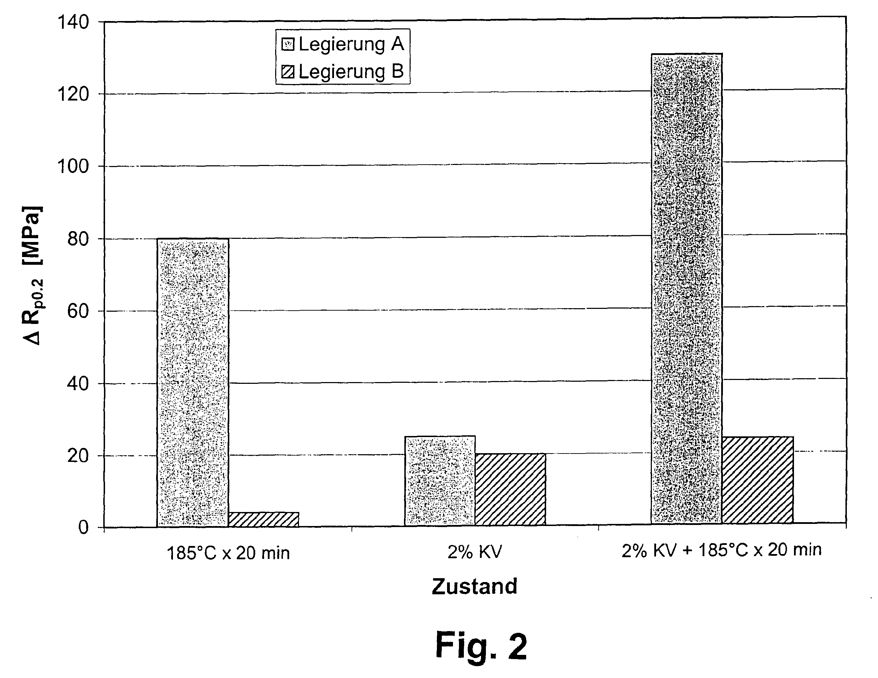

Die in der Tabelle 2 zusammengestellten mechanischen Festigkeitswerte der beiden Aluminiumlegierungen A und B in den verschiedenen untersuchten Zuständen und die in den Fig. 1 und 2 zusätzlich graphisch dargestellten Werte für die Dehngrenze R_{p0.2} zeigen für beide Aluminiumlegierungen A und B im Lieferzustand mit 2% Kaltverformung eine schwache und betragsmässig etwa gleiche Zunahme der Dehngrenze. Wird am Lieferzustand nur eine Lackeinbrennglühung durchgeführt, erfolgt bei der Legierung A eine starke Erhöhung der Dehngrenze, während die Legierung B praktisch keinen Aushärtungseffekt zeigt. Das unterschiedliche Verhalten der beiden Aluminiumlegierungen A und B unter Lackeinbrennbedingungen zeigt sich noch deutlicher bei einer kombinierten Anwendung einer Kaltverformung von 2% mit nachfolgender Glühung bei 185°C während 20 min, wie sie in der Praxis bei der Fertigung von Automobilkarosseriekomponenten häufig auftritt.

**Tabelle 2**

| Legierung | Zustand | RP_{0.2} [MPa] | Rₘ [MPa] | A₈₀ [%] | Δ R_{P0.2} [MPa] |
|---|---|---|---|---|---|
| | Lieferzustand T4 | 115 | 225 | 25.4 | |
| | 185°C x 20 min | 195 | 271 | 20.8 | 80 |
| A | 2% KV | 140 | 251 | 24.3 | 25 |
| | 2% KV + 185°C x 20 min | 245 | 295 | 15.4 | 130 |
| | Lieferzustand T4 | 70 | 129 | 27.7 | |
| B | 185°C x 20 min | 74 | 130 | 25.9 | 4 |
| | 2% KV | 90 | 133 | 25.3 | 20 |
| | 2% KV + 185°C x 20 min | 94 | 149 | 18.6 | 24 |

## Patentansprüche

1. Automobilkarosseriebauteil aus Blech aus einer Aluminiumlegierung vom Typ AlMgSi,
**dadurch gekennzeichnet,**
**dass** im Blech ein wesentlicher Teil der zur Erzielung einer Warmaushärtung in fester Lösung benötigten Elemente Mg und Si zur Vermeidung einer Warmaushärtung in der Form ausgeschiedener Mg₂Si- und/oder Si-Partikel vorliegt.

2. Automobilkarosseriebauteil nach Anspruch 1, **dadurch gekennzeichnet, dass** die Aluminiumlegierung
0,6 bis 1,2 Gew.-% Silizium
0,3 bis 0,8 Gew.-% Magnesium
max. 0,8 Gew.-% Kupfer
max. 0,4 Gew.-% Eisen
max. 0,3 Gew.-% Mangan
max. 0,2 Gew.-% Vanadium
sowie herstellungsbedingte Verunreinigungen und Aluminium als Rest enthält.

3. Automobilkarosseriebauteil nach Anspruch 1, **dadurch gekennzeichnet, dass** die Aluminiumlegierung
0,25 bis 0,60 Gew.-% Silizium
0,25 bis 0,60 Gew.-% Magnesium
0,05 bis 0.30 Gew.-% Kupfer
max. 0,40 Gew.-% Eisen
max. 0,30 Gew.-% Mangan
max. 0,20 Gew.-% Vanadium
sowie herstellungsbedingte Verunreinigungen einzeln max. 0,05 Gew.-%, insgesamt max. 0,15 Gew.-%, und Aluminium als Rest enthält.

4. Automobilkarosseriebauteil nach Anspruch 3, **dadurch gekennzeichnet, dass** die Aluminiumlegierung 0,30 bis 0,50 Gew.-% Silizium enthält.

5. Automobilkarosseriebauteil nach Anspruch 3 oder 4, **dadurch gekennzeichnet, dass** die Aluminiumlegierung 0,30 bis 0,50 Gew.-% Magnesium enthält.

6. Automobilkarosseriebauteil nach einem der Ansprüche 3 bis 5, **dadurch gekennzeichnet, dass** die Aluminiumlegierung max. 0.20 Gew.-% Kupfer enthält.

7. Automobilkarosseriebauteil nach einem der Ansprüche 3 bis 6, **dadurch gekennzeichnet, dass** die Aluminiumlegierung 0,05 bis 0.20 Gew.-% Eisen enthält.

8. Automobilkarosseriebauteil nach einem der Ansprüche 3 bis 7, **dadurch gekennzeichnet, dass** die Aluminiumlegierung max. 0,15 Gew.-% Vanadium enthält.

9. Automobilkarosseriebauteil nach einem der Ansprüche 3 bis 8, **dadurch gekennzeichnet, dass** die Aluminiumlegierung max. 0.10 Gew.-% Mangan enthält.

10. Automobilkarosseriebauteil nach einem der Ansprüche 1 bis 9 als Innenbleche eines Karosserieelements, insbesondere einer Motorhaube, oder ein im Frontbereich einer Automobilkarosserie angeordnetes Verkleidungsteil oder Strukturbauteil bzw. Verstärkungselement.

11. Automobilkarosseriebauteil nach einem der Ansprüche 1 bis 9 als tiefgezogenes Karosserieteil mit gutem Biegeverhalten.

12. Automobilkarosserie. bzw. Komponente einer Automobilkarosserie mit wenigstens einem ersten Bauteil aus Blech aus einer ersten Aluminiumlegierung (A) und wenigstens einem zweiten Bauteil aus Blech aus einer zweiten Aluminiumlegierung (B), wobei die erste und die zweite Aluminiumlegierung vom Typ AlMgSi sind und die zweiten Bauteile gegenüber den ersten Bauteilen nach einer Warmaushärtung der Karosserie bzw. der Karosseriekomponente tiefere mechanische Festigkeitswerte aufweisen,
**dadurch gekennzeichnet,**
**dass** wenigstens im Blech aus der zweiten Aluminiumlegierung (B) ein wesentlicher Teil der zur Erzielung einer Warmaushärtung in fester Lösung benötigten Elemente Mg und Si zur Vermeidung einer Warmaushärtung vor der Warmaushärtung der Karosserie bzw. der Karosseriekomponente in der Form ausgeschiedener Mg₂Si- und/oder Si-Partikel vorliegt.

13. Automobilkarosserie bzw. Komponente einer Automobilkarosserie nach Anspruch 12, **dadurch gekennzeichnet, dass** wenigstens die erste Aluminiumlegierung (A)
0,6 bis 1,2 Gew.-% Silizium
0,3 bis 0,8 Gew.-% Magnesium
max. 0,8 Gew.-% Kupfer
max. 0,4 Gew.-% Eisen
max. 0,3 Gew.-% Mangan
max. 0,2 Gew.-% Vanadium
sowie herstellungsbedingte Verunreinigungen und Aluminium als Rest enthält.

14. Automobilkarosserie bzw. Komponente einer Automobilkarosserie nach Anspruch 13, **dadurch gekennzeichnet, dass** die zweite Aluminiumlegierung (B)
0,25 bis 0,60 Gew.-% Silizium
0,25 bis 0,60 Gew.-% Magnesium
0,05 bis 0.30 Gew.-% Kupfer
max. 0,40 Gew.-% Eisen
max. 0,30 Gew.-% Mangan
max. 0,20 Gew.-% Vanadium
sowie herstellungsbedingte Verunreinigungen einzeln max. 0,05 Gew.-%, insgesamt max. 0,15 Gew.-%, und Aluminium als Rest enthält.

15. Automobilkarosserie bzw. Komponente einer Automobilkarosserie nach Anspruch 14, **dadurch gekennzeichnet, dass** die zweite Aluminiumlegierung (B) 0,30 bis 0,50 Gew.-% Silizium enthält.

16. Automobilkarosserie bzw. Komponente einer Automobilkarosserie nach Anspruch 14 oder 15, **dadurch gekennzeichnet, dass** die zweite Aluminiumlegierung (B) 0,30 bis 0,50 Gew.-% Magnesium enthält.

17. Automobilkarosserie bzw. Komponente einer Automobilkarosserie nach einem der Ansprüche 14 bis 16, **dadurch gekennzeichnet, dass** die zweite Aluminiumlegierung (B) max. 0.20 Gew.-% Kupfer enthält.

18. Automobilkarosserie bzw. Komponente einer Automobilkarosserie nach einem der Ansprüche 14 bis 17, **dadurch gekennzeichnet, dass** die zweite Aluminiumlegierung (B) 0,05 bis 0.20 Gew.-% Eisen enthält.

19. Automobilkarosserie bzw. Komponente einer Automobilkarosserie nach einem der Ansprüche 14 bis 18, **dadurch gekennzeichnet, dass** die zweite Aluminiumlegierung (B) max. 0,15 Gew.-% Vanadium enthält.

20. Automobilkarosserie bzw. Komponente einer Automobilkarosserie nach einem der Ansprüche 14 bis 19, **dadurch gekennzeichnet, dass** die zweite Aluminiumlegierung (B) max. 0.10 Gew.-% Mangan enthält.

21. Automobilkarosserie bzw. Komponente einer Automobilkarosserie nach einem der Ansprüche 14 bis 20, **dadurch gekennzeichnet, dass** die zweiten Bauteile Innenbleche eines Karosserieelements, insbesondere einer Motorhaube, oder im Frontbereich der Karosserie angeordnete Verkleidungsteile oder Strukturbauteile bzw. Verstärkungselemente sind.

22. Automobilkarosserie bzw. Komponente einer Automobilkarosserie nach einem der Ansprüche 14 bis 20, **dadurch gekennzeichnet, dass** die zweiten Bauteile tiefgezogene Karosserieteile mit gutem Biegeverhalten sind.
